# EUROPEAN PATENT APPLICATION

(11) **EP 4 560 266 A1**
(43) Date of publication of application: **28.05.2025**
(21) Application number: 24214348.5
(22) Date of filing: 20.11.2024
(51) Int. Cl.: G01D 4/00, H04B 3/54

(54) **ELECTRONIC SYSTEM TO MEASURE ELECTRICAL ENERGY AND/OR GAS AND/OR WATER CONSUMPTION AND RELATIVE METER OF ELECTRICAL ENERGY AND/OR GAS AND/OR WATER CONSUMPTION AND POWERLINE ELECTRICAL FILTER**

(30) Priority: 21.11.2023 IT 202300024609; 16.10.2024 IT 202400023031
(71) Applicant: SECA Security Cash Sagl, 6833 Vacallo (CH)
(72) Inventor: Filippi, Adriano, CH-6833 VACALLO (CH)
(74) Representative: Penza, Giancarlo

(57) **Abstract**

It is disclosed an electronic system (1) to measure the electrical energy and/or gas and/or water consumptions. The system comprises an electrical system (2), at least one electrical load (3, 4) connected to the electrical system, a meter of the electrical energy consumptions (6, 106) and/or of the gas and/or water consumptions, a Powerline electrical filter (5) interposed between the electrical energy and/or gas and/or water meter (6) and the electrical system (2), the Powerline electrical filter being electrically connected to the electrical system, comprises an electronic network access device (9) connected to the Powerline electrical filter, an electronic vendor device (11), an electronic user device (12), a telecommunications network (10) interposed between the electronic network access device (9) and the electronic vendor device (11) and between the electronic vendor device (11) and the electronic user device (12).

## Description

### TECHNICAL FIELD OF THE INVENTION

The present invention relates generally to the field of electrical energy, gas or water management.

More particularly, the present invention relates to an electronic system to measure the electrical energy and/or gas and/or water consumptions.

### PRIOR ART

New generation smart electrical energy meters (also known as "meters" or "smart meters") installed in proximity to an electrical system of the domestic or industrial type are known, which have the function of dispensing electrical energy to the electrical system and the function of measuring the electrical energy consumption in the system itself.

Said smart meters are managed by the electrical energy distributor, which makes a remote reading (for example, every 15 minutes) of the electrical energy consumptions measured by the meter and then charges the user with the electrical energy consumptions on a monthly or bi-monthly basis.

It is also known that electrical energy losses occur during the distribution of the electrical energy from the producer to the end consumer known as "grid losses", which are charged to the end consumer.

Smart gas or water meters installed in proximity to a home or an industrial plant are also known, which have the function of measuring the gas or gas consumption of a domestic or industrial utility, such as for example a gas boiler of a heating system of the domestic or industrial type.

The Applicant has observed that a disadvantage of the known electrical energy or gas or water meters managed by the distributor is that they do not allow the user of the electrical energy or gas or water utility to know in real time (or in any case in a very short time) their electrical energy or gas or water consumptions, thus not allowing to optimize the electrical energy or gas consumptions.

### SUMMARY OF THE INVENTION

The present invention relates to an electronic system to measure the electrical energy and/or gas and/or water consumptions as defined in the appended claims 1 and 11 and by preferred embodiments thereof described in the dependent claims 2 to 8 and 12.

The Applicant has perceived that the electronic system in accordance with the present invention allows a user of an electrical energy delivery point and/or of a gas and/or water dispensing point to know in real time (or in any case in a very short time) the value of the electrical energy consumptions associated with the electrical energy delivery point and/or the value of the gas and/or water consumptions associated with the gas and/or water dispensing point, thus reducing the electrical energy and/or gas and/or water consumptions as the user is involved in a better consumption management.

It is also possible to charge the user (of the electrical energy delivery point and/or of the gas and/or water dispensing point) with the actual electrical energy and/or gas and/or water consumptions.

Furthermore, the present invention allows to create a virtual meter of the electrical energy consumptions and/or gas and/or water consumptions and to manage a prepaid (e.g. rechargeable) account on which to charge the costs of the electrical energy consumptions of an electrical energy delivery point of the user and/or the costs of the gas and/or water consumptions of a gas and/or water dispensing point of the user.

It is also an object of the present invention an electrical energy and/or gas and/or water meter as defined in the appended claims 9, 13 and 14.

It is also an object of the present invention a Powerline electrical filter as defined in the appended claims 10 and 15.

### BRIEF DESCRIPTION OF THE DRAWINGS

Further features and advantages of the invention will become more apparent from the description which follows of a preferred embodiment and the variants thereof, provided by way of example with reference to the appended drawings, in which:

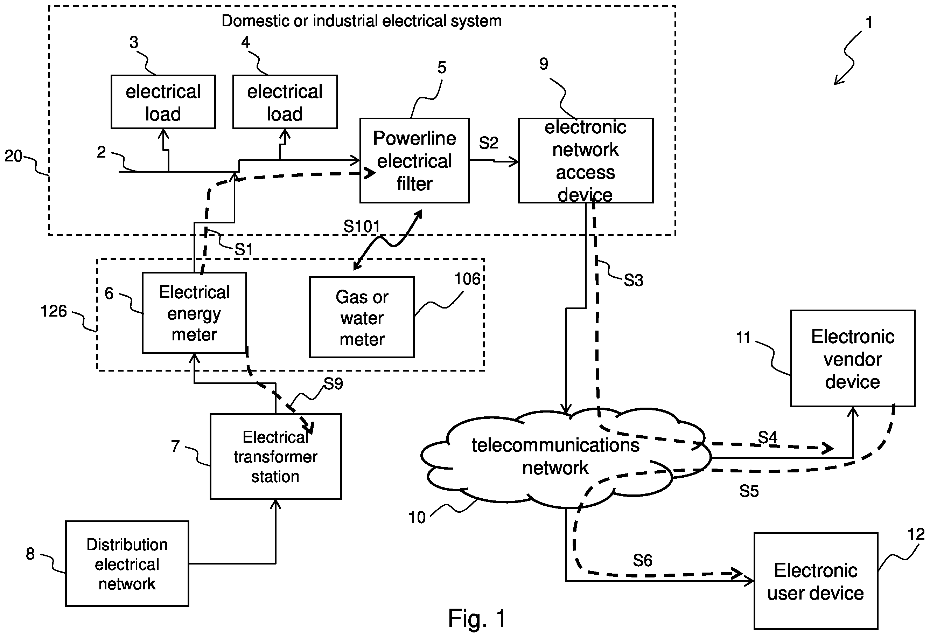

- Figure 1 shows a block diagram of an electronic system to measure the electrical energy consumptions and the gas and/or water consumptions according to an embodiment of the invention.

### DETAILED DESCRIPTION OF THE INVENTION

Note that, in the following description, identical or analogous blocks, components or modules are indicated in the figures with the same numerical references, even if they are shown in different embodiments of the invention.

With reference to Figure 1, it shows an electronic system 1 to supply electrical energy and to dispense gas (e.g., methane or liquid propane gas) and/or water, and to measure the electrical energy consumptions and the gas and/or water consumptions according to an embodiment of the invention.

The electronic system 1 comprises:
- a low-voltage domestic type or medium-voltage industrial type electrical system 2;
- an electrical energy meter 6;
- a gas and/or water meter 106;
- a first electrical load 3;
- a second electrical load 4;
- a medium-to-low voltage electrical transformer station 7, and vice versa;
- a distribution electrical network 8;
- a Powerline electrical filter 5;
- an electronic network access device 9;
- a telecommunications network 10;
- an electronic vendor device 11;
- an electronic user device 12.

The electrical station 7 is electrically connected to the electrical system 2 by means of low voltage electrical wires in the case of a domestic electrical utility or by means of medium voltage electrical wires in the case of an industrial electrical utility, therefore the electrical system 2 receives respectively low voltage or medium voltage electrical energy from the electrical station 7.

A first electrical load 3 and a second electrical load 4 are connected to the electrical system 2 by means of respective electrical outlets.

The Powerline electrical filter 5 is a Powerline modem powered by means of the electrical system 2 and it is electrically connected to the electrical system 2 in a removable way by means of an electrical outlet or in a fixed way by means of appropriate electrical terminals, as will be explained in more detail below.

The electronic network access device 9 is connected to the electrical filter 5 by means of a wired connection or by means of a wireless connection (for example, Wi-fi or Bluetooth).

Furthermore, the electronic network access device 9 is connected to the telecommunications network 10 by means of a wired connection or by means of a wireless connection (for example, Wi-Fi or Bluetooth).

The electronic system 1 uses Powerline Communication (abbreviated PLC) technology to transmit data using the principle of the waves conveyed on the same electrical network carrying electrical energy, using digital modulation.

PCL technology is defined in the IEEE 1901 standard, in the initial version dated 2010 and in the subsequent amendments dated 2019 and 2020.

Based on this PCL technology, the high-frequency data signal (order of Kilo or Mega hertz) is transmitted on the same cable as the low-frequency electrical current signal (50 or 60 Hertz), generating a low-frequency signal modulated based on the high-frequency signal of the piece of information to be transmitted.

The separation between the two current signals is performed based on the filtering and separation of the frequency intervals used.

The narrowband Powerline technology transmits a series of subcarriers in the band comprised between 3 Kilohertz (kHz) and 500 Kilohertz, in particular in the band comprised between 125 kHz and 140 kHz, which allows data to be transmitted on electrical lines at a speed comprised between 10 and 500 Kilobits per second (Kbps), up to a maximum distance of about 3 Km.

To minimize noise and interference, the subcarriers are equally spaced and distributed, the channels occupy relatively small bands, and the adjacent channels are orthogonal to each other.

In particular, the Powerline electrical filter 5 is inserted into the electrical outlet of the electrical system 2 and has the function of receiving the modulated PLC electrical signal carrying electrical energy and carrying data, and furthermore, the Powerline electrical filter 5 has the function of separating therefrom the high-frequency data signal from the low-frequency electrical signal, by means of the recognition of the two different low and high-frequency subcarriers, as will be explained in more detail below.

The electrical energy meter 6 (also known as "meter" or "smart meter" or "smart open meter") is positioned in proximity to the building 20 comprising the electrical system 2 and is interposed between the electrical station 7 and the electrical system 2; in particular, the electrical energy meter 6 is connected in input/output with the electrical station 7 and in output with the electrical system 2 by means of a plurality of respective electrical terminals.

The electrical energy meter 6 has the function of measuring the electrical energy absorption of an electrical energy delivery point associated with the electrical system 2, i.e. the total electrical energy consumption of the different electrical loads (active and/or reactive) connected to the electrical system 2 associated with the electrical energy delivery point or the individual consumption of the different electrical loads connected to the electrical system 2, wherein said electrical energy is delivered by the electrical station 7.

Even more particularly, the electrical energy meter 6 is configured to measure the electrical energy absorption of the electrical energy delivery point associated with the electrical system 2 (i.e. the total electrical energy consumption of the electrical loads connected to the electrical system 2) in a plurality of defined time intervals, for example periodically (the period may for example be equal to about 15 minutes or one hour).

The electrical energy absorption/consumption is measured, for example, as the instantaneous electrical power (expressed in Watts) or as the electrical power maintained for one hour (expressed in Watts hour, or Kilowatt hour, abbreviated kWh).

In one embodiment, the electrical energy meter 6 is configured to detect an overload condition in which the value of the total electrical energy consumption of the electrical loads connected to the electrical system 2 is greater than a threshold consumption value (e.g., a contractual electrical power threshold value) during one or more of the plurality of defined intervals, wherein said detection occurs at an operating time value that is less than a time threshold value after which the electrical energy meter 6 performs the disconnection of the electrical system 20 from the distribution electrical network 8.

For example, the time threshold value is equal to 5 minutes and the value of the operating time of the electrical energy meter 6 is equal to 1 minute: in this case the user has 4 minutes to disconnect one or more electrical loads from the electrical system 2 in order to avoid the disconnection.

Furthermore, according to said embodiment, the electrical energy meter 6 is configured to generate (at an instant of time prior to that in which the disconnection might occur) an alert or alarm signal representative of said exceeding of the threshold consumption value; for example, the electrical energy meter 6 transmits an alert or alarm message towards the electronic user device 12, so that the user can take the necessary countermeasures to avoid the interruption of the electrical energy delivery.

The electrical energy meter 6 therefore comprises a processing unit (for example, a microcontroller or a microprocessor), an electrical energy consumption measurement unit and a wired electrical signal transceiver, in particular of the Powerline Communication type.

The electrical energy consumption measurement unit is implemented for example with a current transformer measuring the current flowing between the station 7 and the electrical network 2 and with a voltage transformer measuring the corresponding voltage value, then the instantaneous power is calculated by means of the multiplication between the measured current value and the measured voltage value; subsequently said calculated value of the instantaneous power is integrated over time to calculate the electrical energy consumption, typically expressed in kWh.

Alternatively, the electrical energy consumption measurement unit is implemented with suitable integrated circuits.

For the purposes of explaining the invention, two electrical loads 3 and 4 connected to the electrical system by means of a respective current outlet (or other type of connection), in which the electrical loads 3 and 4 are actually operative to perform the function for which they were constructed are considered.

Some examples of electrical loads are a washing machine, a dishwasher, an iron, a dryer, a heat pump for heating, an air cooling device.

Furthermore, the electrical energy meter 6 has the function of transmitting, by means of the PLC technology on the cables of the electrical system 2 towards the Powerline electrical filter 5, an identifier representative of an electrical energy delivery point associated with the user of the electrical system 2 and transmitting the data representative of the electrical energy consumptions of the electrical loads 3 and 4 connected to the electrical system 2.

In particular, the electrical energy meter 6 is configured to transmit towards the Powerline electrical filter 5 at defined time intervals (for example periodically, in particular with an interval of about 15 minutes) a first PLC-type conveyed wave signal S1 carrying the identifier representative of an electrical energy delivery point associated with the user of the electrical system 2 and carrying the data representative of the electrical energy consumptions of the connected electrical loads 3, 4 (see the dashed line S1 in Figure 1).

In one embodiment, the communication (of the data of the electrical energy consumptions and the identifier of the electrical energy delivery point) between the electrical energy meter 6 and the Powerline electrical filter 5 is performed by means of waves conveyed with Powerline Communication (PLC) technology using the "Meters and More" communication protocol defined in the following IEC standards: TS IEC 13-82 (2020), TS IEC 13-83 (2020), TS IEC 13-84 (2020).

Furthermore, the electrical energy meter 6 is configured to transmit at defined time intervals, by means of the PLC technology, said identifier of the electrical energy delivery point and transmit said data representative of the electrical energy consumptions towards the electrical transformer station 7 (see the dashed line S9 in Figure 1).

In one embodiment, the electrical energy meter 6 is provided with two channels for exchanging data both in the direction towards the vendor and in the direction towards the distributor.

In particular, inside the electrical transformer station 7 there is a concentrator collecting the data of the electrical energy consumptions of the electrical energy delivery point associated with the electrical system 2 and also collecting the data of the electrical energy consumptions of other electrical energy delivery points connected to the same electrical station 7; the collected data of the electrical energy consumptions of the different electrical energy delivery points is then sent (for example by means of the distribution electrical energy network 8) to the distributor, who can thus calculate the costs to be charged to the different electrical energy delivery points.

The identifier of the electrical energy delivery point associated with the electrical system 2 is for example the Point of Delivery (abbreviated POD), i.e. an alphanumeric code composed of 14 or 15 characters uniquely identifying a delivery of electrical energy in a particular geographical location.

The gas and/or water meter 106 (also known as a gas and/or water "meter") is positioned in proximity to the building 20, in particular in the gas entry pipe entering the building 20 and/or in the water entry pipe entering the building 20.

The gas and/or water meter 106 has the function of measuring the gas and/or water consumptions of a gas and/or water dispensing point associated with the building 20 for a domestic or industrial gas and/or water utility and has the function of transmitting, towards the electronic vendor device 11, the measured gas and/or water consumptions (together with the value of a respective identifier of a gas and/or water dispensing point) in one or more defined time intervals (for example, at periodic intervals), by means of the Powerline electrical filter 5 and of the electronic network access device 9, as it will be explained in more detail below.

For example, a gas boiler is installed inside the building 20 provided with a heating system of the domestic or industrial type.

Another example is a thermal power plant located in proximity to the building 20, wherein the thermal power plant supplies a heating system of the domestic or industrial type of the building 20, or supplies an industrial processing system inside the building 20.

The gas and/or water meter 106 comprises a processing unit (e.g., a microcontroller or a microprocessor) and comprises a short-medium distance wireless signal transceiver configured to transmit towards the Powerline electrical filter 5 a short-medium distance wireless signal S101 carrying the data of the gas and/or water consumptions of a domestic or industrial utility of the building 20 and carrying a respective identifier of a gas and/or water dispensing point associated with the domestic or industrial utility (i.e., an identifier of the gas dispensing point and/or another identifier of the water dispensing point).

For example, the short-medium distance wireless signal transceiver of the meter 106 is implemented with 169 Mhz Wireless M-bus (abbreviated wM-Bus) radio technology, or it implements the 868 Mhz Long Range Wide Area Network (abbreviated LoRaWan) protocol.

Alternatively, the short-medium distance wireless signal transceiver of the meter 106 is of the Wi-Fi or Bluetooth type.

The gas and/or water meter 106 comprises one or more batteries for powering the internal processing unit and the short-medium distance wireless signal transceiver.

The Powerline electrical filter 5 is interposed between the electrical energy meter 6 and the electrical system 2.

In particular, the Powerline electrical filter 5 can be electrically connected to the electrical system 2 in a removable manner by means of a plug inserted into an electrical outlet of the electrical system 2.

Alternatively, the Powerline electrical filter 5 is connected downstream of the electrical energy meter 6 and is electrically connected to the electrical system 2 in a fixed manner by means of suitable electrical terminals.

The Powerline electrical filter 5 comprises a transceiver having a wired interface (e.g. Ethernet) or a short-distance wireless transceiver (e.g. Wi-Fi) for connecting it to the electronic network access device 9.

The Powerline electrical filter 5 is configured to receive from the electrical system 2 (by means of PLC technology) the low-frequency electrical current signal (for example, 50 Hertz) modulated based on the high-frequency signal (for example, comprised between 125 kHz and 140 kHz) carrying the identifier of the electrical energy delivery point associated with the electrical system 2 and carrying the data representative of the electrical energy consumptions of the electrical loads connected to the electrical system 2, then the Powerline electrical filter 5 is configured to separate the high-frequency current signal carrying the identifier of the electrical energy delivery point and carrying said data representative of the electrical energy consumptions from the low-frequency current signal, finally the Powerline electrical filter 5 is configured to forward (by means of the wired interface or the short-distance wireless transceiver) said identifier of the electrical energy delivery point and said data of the electrical energy consumptions of the electrical loads connected to the electrical system 2 towards the electronic network access device 9.

In addition, the Powerline electrical filter 5 comprises a short-medium distance wireless signal transceiver (i.e. a radio modem) configured to receive from the gas and/or water consumption meter 106 the short-medium distance wireless signal S106 carrying the respective identifier of the gas and/or water dispensing point associated with the domestic or industrial utility of the building 20 and carrying the data of the gas and/or water consumptions of the domestic or industrial utility.

For example, the transceiver of the Powerline electrical filter 5 is implemented with 169 Mhz Wireless M-bus radio technology, or it implements the 868 Mhz Long Range Wide Area Network (LoRaWan) protocol.

The identifier of the gas dispensing point is for example the "Redelivery Point" (abbreviated PDR) composed of 14 numbers uniquely identifying the gas delivery.

In one embodiment, the Powerline electrical filter 5 comprises a processing unit (for example, a microcontroller or a microprocessor) configured to detect an overload condition in which the value of the total electrical energy consumption of the electrical loads connected to the electrical system 2 is greater than a threshold consumption value (for example, a contractual electrical energy threshold value) during one or more of the plurality of defined intervals, wherein said detection occurs in a value of an operating time that is less than a time threshold value after which the electrical energy meter 6 disconnects the electrical system 20 from the distribution electrical network 8.

For example, the value of the time threshold is equal to 5 minutes and the operating time value of the electrical energy meter 6 is equal to 1 minute: in this case the user has 4 minutes to disconnect one or more electrical loads from the electrical system 2 in order to avoid the disconnection.

Furthermore, according to said embodiment, the processing unit of the Powerline electrical filter 5 is configured to generate (at an instant of time prior to that in which the disconnection might occur) an alert or alarm signal representative of said exceeding of the threshold consumption value; for example, the Powerline electrical filter 5 transmits an alert or alarm message towards the electronic user device 12 through the electronic network access device 9 and the telecommunications network 10, so that the user can take the necessary countermeasures to avoid the interruption of the electrical energy delivery.

The electronic network access device 9 is connected to the Powerline electrical filter 5 by means of a wired connection (see the second signal S2 in Figure 1) or by means of a wireless connection.

The electronic network access device 9 has the function of receiving from the Powerline electrical filter 5, by means of the second signal S2, the identifier of the electrical energy delivery point associated with the electrical system 2 and the function of receiving the data representative of the electrical energy consumptions of the electrical loads connected to the electrical system 2 and has the function of transmitting, towards the electronic vendor device 11 through the telecommunications network 10, a third signal S3 carrying said identifier of the electrical energy delivery point and carrying said data of the electrical energy consumptions of the electrical loads connected to the electrical system 2.

In addition, the electronic network access device 9 has the function of receiving from the Powerline electrical filter 5, by means of the second signal S2, the respective identifier of the gas and/or water dispensing point associated with a domestic or industrial utility of the building 20 and the function of receiving data representative of the gas and/or water consumptions, then the electronic network access device 9 has the function of transmitting, towards the electronic vendor device 11 through the telecommunications network 10, the third signal S3 carrying said respective identifier of the gas and/or water dispensing point and carrying said data of the gas and/or water consumptions of the domestic or industrial utility.

The electronic network access device 9 is for example a router modem comprising a Wi-fi (or Bluetooth) interface connected to the Powerline electrical filter 5 and comprises a network interface (of the electrical or optical type) connected to the telecommunications network 10.

The telecommunications network 10 if of the medium-long distance type and has the function of receiving the third signal S3 carrying the identifier of the electrical energy delivery point associated with the electrical system 2 and carrying the data representative of the electrical energy consumptions of the electrical loads connected to the electrical system 2, and has the function of forwarding towards the electronic vendor device 11 the identifier of the electrical energy delivery point and the data of the electrical energy consumptions of the electrical loads (see dashed lines S3 and S4 in Figure 1).

In addition, the telecommunications network 10 has the function of receiving the third signal S3 carrying the respective identifier of the gas and/or water dispensing point and carrying the data of the gas and/or water consumptions of the domestic or industrial utility, and has the function of forwarding towards the electronic vendor device 11 the respective identifier of the gas and/or water dispensing point and the data of the gas and/or water consumptions of the domestic or industrial utility.

The telecommunications network 10 is for example the Internet network in which the TCP/IP protocol is used.

The electronic vendor device 11 is connected to the telecommunications network 10 by means of a wired connection or by means of a wireless connection (e.g. Wi-Fi or Bluetooth).

Note that the electronic vendor device 11 is different from the electronic device of the distributor, as the latter is connected to the distribution electrical network 8.

The electronic vendor device 11 is for example a network server and comprises a medium-long distance signal transceiver, a non-volatile memory and a processing unit (for example, a microprocessor).

In particular, the transceiver of the electronic vendor device 11 is configured to receive from the telecommunications network 10 a fourth signal S4 carrying the identifier of the electrical energy delivery point associated with the electrical system 2 and carrying the data representative of the electrical energy consumptions of the electrical loads connected to the electrical system 2.

Furthermore, the transceiver of the electronic vendor device 11 is configured to receive from the telecommunications network 10 the fourth signal S4 carrying the respective identifier of the gas and/or water dispensing point and carrying the data of the gas and/or water consumptions of the domestic or industrial utility.

Therefore the electronic vendor device 11 receives the data of the electrical energy consumptions directly from the electrical energy meter of the user, differently from the known solutions where the data of the electrical energy consumptions is transmitted from the electrical energy meter of the user to the vendor through the distributor.

Furthermore, the transceiver of the electronic vendor device 11 is configured to transmit towards the electronic user device 12, through the telecommunications network 10, the identifier of the electrical energy delivery point associated with the electrical system 2 and the data representative of the electrical energy consumptions of the electrical loads connected to the electrical system 2.

Furthermore, the transceiver of the electronic vendor device 11 is configured to transmit towards the electronic user device 12, through the telecommunications network 10, the respective identifier of the gas and/or water dispensing point and the data of the gas and/or water consumptions of the domestic or industrial utility.

In one embodiment, the electronic system 1 further comprises a local Powerline electrical filter interposed between the power supply outlet of each electrical load 3, 4 and the electrical system 2, wherein each local Powerline electrical filter has a function similar to that of the central type Powerline electrical filter 5, with the difference that each local Powerline electrical filter performs the measurement of the electrical energy consumptions associated with the respective electrical load.

Therefore, a first local Powerline electrical filter is connected between the electrical outlet of the first electrical load 3 and the electrical system 2 and performs the measurement of the electrical consumptions of the first electrical load 3 during its operation and a second local Powerline electrical filter is connected between the electrical outlet of the second electrical load 4 and the electrical system 2 and performs the measurement of the electrical consumptions of the second electrical load 4 during its operation.

Each local Powerline electrical filter then transmits towards the central Powerline electrical filter 5 the measured values of the electrical consumptions of the respective electrical load, then the central Powerline electrical filter 5 transmits the aggregated values of the received electrical consumptions of the plurality of electrical loads towards the electronic vendor device 11 through the electronic network access device 9 and the telecommunications network 10, as illustrated above.

According to a first embodiment, the memory of the electronic vendor device 11 is configured to store a value representative of a remaining credit (for example, expressed in Euros) of the user of an electrical energy delivery point associated with the electrical system 2 and is configured to store a price table indicative of the current selling price of the electrical energy (for example, expressed in Euros), typically expressed in KiloWatt per hour (for example, Euros per Kw/h).

Furthermore, according to said first embodiment, the processing unit of the electronic vendor device 11 is configured to execute an appropriate software program calculating, as a function of the received data representative of the electrical energy consumptions of the electrical loads connected to the electrical system 2 and as a function of the current selling price of the electrical energy, the current cost associated with the electrical energy consumptions of the electrical loads connected to the electrical system 2 in a defined time interval prior to the current one.

For example, the electrical energy consumptions are expressed in KWh (kilowatt per hour) and the selling price is expressed in Euros for one KWh, so the cost of the electrical energy consumptions in the defined time interval is calculated by multiplying the current selling price in Euros/KWh multiplied by the value of the consumptions of KWh of electrical energy of the electrical loads connected to the electrical system 2 in the defined time interval.

Subsequently, according to said first embodiment, the software program executed on the processing unit of the electronic vendor device 11 calculates a remaining credit associated with the electrical energy delivery point of the user of the electrical system 2 as the difference between a current available credit of the user of the electrical energy delivery point and the calculated current cost associated with the electrical energy consumptions of the electrical loads connected to the electrical system 2 during the defined time interval prior to the current one.

A virtual electrical energy meter is then implemented by means of the electronic vendor device 11.

The previous considerations relating to the electronic vendor device 11 can also be made for the gas and/or water consumptions, i.e. the remaining credit is associated with the gas and/or water dispensing point and a virtual gas and/or water consumption meter is implemented: in this case the software program executed by the processing unit of the electronic vendor device 11 calculates, as a function of the received data representative of the gas and/or water consumptions of the gas and/or water dispensing point of the building 20 and as a function of the current gas and/or water selling price, the current cost associated with the gas and/or water consumptions of the gas and/or water dispensing point in a defined time interval prior to the current one.

For example, the gas consumption is expressed in standard cubic meter (smc) and the selling price is expressed in Euros per standard cubic meter (Euros/smc), thus the cost of gas consumptions in the defined time interval is calculated by multiplying the current selling price in Euros/smc multiplied by the value of gas smc consumptions in the defined time interval; similarly, water consumption is expressed in cubic meters (mc) and the selling price is expressed in Euros per cubic meter (Euros/m3), so the cost of the water consumptions in the defined time interval is calculated by multiplying the current selling price in Euros/m3 multiplied by the value of the water mc consumptions in the defined time interval.

Subsequently, according to said first embodiment, the software program executed on the processing unit of the electronic vendor device 11 calculates a remaining credit associated with the gas and/or water delivery point as the difference between a current available credit of the user of the gas and/or water delivery point and the calculated current cost associated with the gas and/or water consumptions during the defined time interval prior to the current one.

Finally, according to said first embodiment, the transceiver of the electronic vendor device 11 is configured to transmit, towards the electronic user device 12 through the telecommunications network 10, a fifth signal S5 carrying a value indicative of the remaining credit of the user of the electrical energy delivery point, i.e. a value indicating an amount (expressed for example in Euros) that the user still has available to consume electrical energy at the delivery point.

In addition, the transceiver of the electronic vendor device 11 is configured to transmit, towards the electronic user device 12 through the telecommunications network 10, the fifth signal S5 carrying a value indicative of the remaining credit of the user of the gas and/or water dispensing point, i.e. a value indicating an amount (expressed for example in Euros) that the user still has available to consume gas and/or water in the gas and/or water dispensing point considered.

The electronic user device 12 comprises a medium-long distance signal transceiver, a processing unit and a display.

The electronic user device 12 is for example a smartphone, a tablet or a desktop computer or a laptop.

The transceiver of the electronic user device 12 is configured to receive from the telecommunications network 10 a sixth signal S6 carrying the data representative of the electrical energy absorbed by the electrical energy delivery point associated with the electrical system 2 (i.e. of the electrical energy consumption of the electrical loads connected to the electrical system 2), then the processing unit of the electronic user device 12 is configured to execute an appropriate software program to generate a display driving signal to display the value of the electrical energy consumption of the electrical loads connected to the electrical system 2.

Furthermore, the transceiver of the electronic user device 12 is configured to receive from the telecommunications network 10 the sixth signal S6 carrying the data representative of the gas and/or water consumptions of the gas and/or water dispensing point of the domestic or industrial utility of the building 20.

In particular, the processing unit of the electronic user device 12 receives from the transceiver the data representative of the electrical energy consumptions of the electrical loads connected to the electrical system 2 in a plurality of defined successive time intervals (for example, every about 15 minutes for 24 hours a day), then the processing unit executes the software program to drive the display to display a graph showing the electrical energy consumptions of the electrical loads, for example by means of a histogram showing the electrical energy consumptions in intervals on an hourly and/or daily and/or monthly basis.

Furthermore, the processing unit of the electronic user device 12 receives from the transceiver the data representative of the gas and/or water consumptions of the domestic or industrial utility of the building 20 in a plurality of defined successive time intervals (for example, every about 15 minutes for 24 hours a day), then the processing unit executes the software program to drive the display to display a graph showing the gas and/or water consumptions, for example by means of a histogram showing the gas and/or water consumptions in intervals on an hourly and/or daily and/or monthly basis.

In addition, the display associated with the electronic user device 12 also displays the cost (for example expressed in Euros) associated with the selected value of the electrical energy consumption of the electrical loads at the instant considered (i.e. the cost of a value of electrical energy consumed at a certain time of the day, or on/in a certain day and month of the year, or in a certain year is shown).

Even more particularly, the display of the electronic user device 12 is configured to display the electrical energy consumptions and possibly the corresponding costs of the individual electrical loads, expressed on an hourly, daily or monthly basis.

In addition, the display of the electronic user device 12 also displays the cost (for example expressed in Euros) associated with the selected value of the gas and/or water consumption at the instant considered (i.e. the cost of a value of gas and/or water consumed at a certain time of day, or on/in a certain day and month of the year, or in a certain year is shown).

According to said first embodiment, the transceiver of the electronic user device 12 is configured to receive from the telecommunications network 10 the sixth signal S6 carrying the value representative of the remaining credit of the user of the electrical energy delivery point associated with the electrical system 2, then the processing unit of the electronic user device 12 is configured to receive the value of the remaining credit and to generate a display driving signal for displaying said value of the remaining credit of the user of the electrical energy delivery point.

Furthermore, the transceiver of the electronic user device 12 is configured to receive from the telecommunications network 10 the sixth signal S6 carrying the value representative of the remaining credit of the user of the gas and/or water dispensing point of the domestic or industrial utility of the building 20, then the processing unit of the electronic user device 12 is configured to receive the value of the remaining credit and to generate a display driving signal to display said value of the remaining credit of the user of the gas and/or water dispensing point.

In this way, the user is aware of how much can still be spent for electrical energy consumption and for gas and/or water consumptions, i.e. what is the energy autonomy (for example, expressed in hours) and the autonomy of the gas and/or water consumption (for example, expressed in cubic meters) that can be predicted based on the current value of the remaining credit.

Therefore, the user can modify their behaviour in order to direct it towards energy saving of an electrical, gas or water type.

It is therefore possible for the electrical energy vendor and for the gas and/or water vendor to provide a prepaid consumption type selling product, based on which the user of the electronic user device 12 makes a payment by means of a virtual POS (Point of Sale) and then the user transmits a cash amount to the vendor, generating or updating a cash credit in favour of the user, in which said credit is decreased (for example, in hourly steps) as a function of the electrical energy consumption and of the gas and/or water consumption used by the user.

For example, the electronic user device 12 is a smartphone executing an appropriate software application, by means of which the user of the smartphone 12 (who is typically the same user of the electrical energy and/or gas and/or water delivery of the building 20) can display by means of the display the information necessary for the management of the virtual electrical energy and/or gas and/or water meter, such as for example:
- the display of the remaining credit of the electrical energy delivery point associated with the electrical system 2;
- the display of the remaining credit of the gas dispensing point of the building 20;
- the display of the remaining credit of the water dispensing point of the building 20;
- the display of graphs showing electrical energy and/or gas and/or water consumptions, on an hourly and/or daily and/or monthly basis.

In one embodiment, the processing unit of the electronic device 12 executes the software program calculating an estimation of the expected expenditure for the electrical energy and/or gas and/or water consumption from a certain day until the end of a certain period, such as for example from the current day until the end of the current month.

In one embodiment, the electrical energy meter 6 is further configured to transmit (towards the Powerline electrical filter 5) the first signal S1 carrying further data associated with the electrical energy delivery point in order to improve the identification and management of the same electrical energy delivery point, such as for example a further identifier of the same electrical energy meter 6, in particular a unique serial number for the manufacturer of the meter 6.

In this case, said further data (for example, the value of the further identifier) is received by the electronic vendor device 11 through the signals S1, S2, S3, S4, similarly to what is illustrated above for the identifier of the electrical energy delivery point.

In one embodiment, the electrical energy meter 6 is further configured to transmit (towards the Powerline electrical filter 5) the first signal S1 further carrying data representative of the nominal power of the electrical energy delivery point and carrying data representative of the peak power consumed in one or more defined time intervals; in this case the electronic vendor device 11 further receives the values of the nominal power of the electrical energy delivery point and of the peak power consumed through the signals S1, S2, S3, S4, similarly to what is illustrated above.

According to a variant of the first embodiment, the remaining credit stored in the memory of the electronic vendor device 11 is of a rechargeable type, i.e. it is an account that is recharged by the user when the value of the remaining credit is too low, in particular less than a defined threshold value.

In this case, when the electronic device 12 is a smartphone executing an appropriate software application, the user can perform the recharge of the remaining credit by means of said software application, for example when the value of the remaining credit is too low.

In a second embodiment, the electronic system 1 is configured to measure the values of the electrical energy consumptions associated with the individual electrical loads connected to the electrical system 2 in the defined time interval prior to the current one, then the electronic vendor device 11 and the electronic user device 12 receive the values of the electrical energy consumptions associated with the individual electrical loads.

For example, in the case of two electrical loads 3 and 4, a first value of the electrical energy consumption associated with the first electrical load 3 in one or more defined time intervals (for example, every 15 minutes for 5 hours) and a second value of the electrical energy consumption associated with the second electrical load 4 in the same defined time interval are measured: the electronic vendor device 11 and the electronic user device 12 receive the first and second values, therefore the user of the electrical system 2 is able to understand whether they have consumed more the first electrical load 3 or the second electrical load 4 in the defined time interval and can therefore decide to modify the use of the first and second electrical loads 3 and 4.

Based on the second embodiment, the values of the electrical energy consumptions associated with the individual electrical loads are measured by means of the appropriately programmed electrical energy meter 6 or are measured by using a Powerline electrical filter associated with each electrical load whose consumptions need to be monitored.

In the latter case, consider two electrical loads 3 and 4 shown in Figure 1: a second Powerline electrical filter is interposed between the plug of the electrical load 3 and an electrical outlet of the electrical network 2 and a third Powerline electrical filter is interposed between the plug of the electrical load 3 and another electrical outlet of the electrical network 2, in addition to the first Powerline electrical filter 5. In this case the second Powerline electrical filter is configured to measure the electrical energy consumption of the electrical load 3 in a defined time interval prior to the current instant and the third Powerline electrical filter is configured to measure the electrical energy consumption of the electrical load 4 in the same defined time interval, then the second electrical filter is configured to transmit towards the first Powerline electrical filter 5 the electrical energy consumption of the electrical load 3 and the third electrical filter is configured to transmit towards the first Powerline electrical filter 5 the electrical energy consumption of the electrical load 4.

Therefore, the Powerline electrical filter 5 collects the data representative of the electrical consumptions of the electrical loads 3 and 4, then forwards it towards the electronic network access device 9 through the second signal S2: the operation of the system 1 proceeds in a manner similar to that illustrated above, i.e. the data representative of the electrical consumptions of the different electrical loads 3 and 4 is transmitted to the electronic vendor device 11 through the telecommunications network 10, subsequently said data of the electrical consumptions of the different electrical loads 3 and 4 is transmitted from the electronic vendor device 11 to the electronic user device 12 through the telecommunications network 10.

Note that for the purposes of explaining the invention, the gas and/or water meter 106 has been shown in Figure 1 separate from the electrical energy meter 6, but this is just a functional representation.

In fact, it is also possible to implement a hybrid meter 126 enclosing both the functionalities of the electrical energy meter 6, and the functionalities of the gas and/or water meter 106: in this case the hybrid meter 126 performs both the measurement of the electrical energy consumptions of the electrical energy delivery point associated with the electrical system 2 (i.e. the functions carried out by the electrical energy meter 6), and the measurement of the gas consumptions of a gas dispensing point associated with the building 20 for a domestic or industrial gas utility, and the measurement of the water consumptions of a water dispensing point associated with the building 20 for a domestic or industrial water utility (i.e. both the functions carried out by the gas and/or water meter 106).

In one embodiment, the hybrid meter 126 only performs the measurement of the electrical energy consumptions of the electrical energy delivery point associated with the electrical system 2, i.e. only the functions performed by the electrical energy meter 6 are carried out and the functions performed by the gas and/or water meter 106 are not carried out.

In another embodiment, the hybrid meter 126 only performs the measurement of the gas consumptions of a gas dispensing point associated with the building 20 for a domestic or industrial gas utility, i.e. the function of measuring gas consumption performed by the meter 106 is carried out, the function performed by the electrical energy meter 6 is not carried out and the function of measuring water consumption performed by the meter 106 is not carried out.

In another embodiment, the hybrid meter 126 only performs the measurement of the water consumptions of a water dispensing point associated with the building 20 for a domestic or industrial water utility, i.e. the function of measuring water consumption carried out by the meter 106 is performed, the function carried out by the electrical energy meter 6 is not performed and the function of measuring gas consumption performed by the meter 106 is not carried out.

In another embodiment, the hybrid meter 126 performs the measurement of the electrical energy consumptions of the electrical energy delivery point associated with the electrical system 2 (i.e. the functions carried out by the electrical energy meter 6) and performs the measurement of the gas consumptions of a gas dispensing point associated with the building 20 for a domestic or industrial gas utility (i.e. it carries out a function performed by the meter 6), therefore the hybrid meter 126 does not perform the measurement of the water consumptions.

In another embodiment, the hybrid meter 126 performs the measurement of the electrical energy consumptions of the electrical energy delivery point associated with the electrical system 2 (i.e. the functions carried out by the electrical energy meter 6) and performs the measurement of the water consumptions of a water dispensing point associated with the building 20 for a domestic or industrial water utility (i.e. it carries out a function performed by the meter 6), therefore the hybrid meter 126 does not perform the measurement of the gas consumptions.

In another embodiment, the hybrid meter 126 performs the measurement of the gas consumptions of a gas dispensing point associated with the building 20 for a domestic or industrial gas utility and performs the measurement of the water consumptions of a water dispensing point associated with the building 20 for a domestic or industrial water utility (i.e., it performs both functions carried out by the gas and/or water meter 106), therefore the hybrid meter 126 does not perform the measurement of the electrical energy consumptions.

It should also be noted that for the purposes of explaining the invention, the case has been considered in which the gas and/or water meter 106 is connected via radio with short-medium distance signals with the Powerline electrical filter 5 in order to transmit the data representative of the gas and/or water consumptions and the respective identifier of the gas and/or water dispensing point, but an embodiment is also possible in which the gas and/or water meter 106 is connected via radio directly with the electronic access device network 9 with short-medium distance wireless signals (for example by means of Wi-Fi or Bluetooth) or with long distance wireless signals (for example, a mobile radio network of the GSM or 4G/LTE or 5G/NR type) in order to transmit the data representative of the gas and/or water consumptions and the respective identifier of the gas and/or water dispensing point; in this embodiment (in the event that there is no interest in measuring the electrical energy consumptions) the presence of the Powerline electrical filter 5 is no longer necessary, i.e. the presence of the electronic network access device 9 is sufficient.

According to another embodiment relating to the measurement of gas and/or water consumptions, the gas and/or water meter 106 comprises a medium-long distance wireless signal transceiver (for example, mobile radio of the GSM or 4G/LTE or 5G/NR type) configured to transmit towards the electronic vendor device 11 the data representative of the gas and/or water consumptions and the respective identifier of the gas and/or water dispensing point; in this embodiment (in the event that there is no interest in measuring the electrical energy consumptions) neither the presence of the Powerline electrical filter 5 nor the presence of the electronic network access device 9 is no longer necessary, as the gas and/or water meter 106 is connected with the electronic vendor device 11 through the telecommunications network 10.

In the event that the medium-long distance wireless signal transceiver of the gas and/or water meter 106 is a mobile radio of the 4G (Long Term Evolution, LTE) or 5G (New Radio, NR) type, the narrowband Internet of Things (abbreviated NB-loT) technology can be used to transmit data towards the electronic vendor device 11.

The use of NB-loT has the advantage (compared to wM-Bus and LoRaWan technology) of not having to require the installation of a dedicated network infrastructure, as NB-loT uses the existing mobile radio network infrastructure, such as for example 4G (Long Term Evolution, LTE) or 5G (New Radio, NR); in addition NB-loT provides a robust two-way communication with reduced bandwidth and allows to reach meters installed in difficult locations, such as basements, undergrounds and remote or rural areas.

## Claims

1. Electronic system (1) to measure an electrical energy consumption,
the system comprising:
- an electrical system (2);
- at least one electrical load (3, 4) connected to the electrical system;
- an electrical energy meter (6) connected to the electrical system (7);
- a Powerline electrical filter (5) interposed between the electrical energy meter (6) and the electrical system (2), the Powerline electrical filter being electrically connected to the electrical system;
- an electronic network access device (9) connected to the Powerline electrical filter;
- an electronic vendor device (11);
- an electronic user device (12);
- a telecommunications network (10) interposed between the electronic network access device (9) and the electronic vendor device (11) and between the electronic vendor device (11) and the electronic user device (12);
wherein the electrical energy meter (6) is configured to:
▪ measure, in a defined time interval, an electrical energy consumption of the at least one electrical load connected to the electrical system;
▪ transmit (S1), through the electrical system (2), a first signal (S1) of the Powerline Communication type carrying an identifier representative of an electrical energy delivery point associated with the electrical system (2) and carrying data representative of the electrical energy consumption of the at least one electrical load connected to the electrical system in the defined time interval;
wherein the Powerline electrical filter (5) is configured to:
▪ receive, from the electrical system (2), said first signal (S1) and extract therefrom the identifier of the electrical energy delivery point and the data representative of the electrical energy consumption of the at least one electrical load in the defined time interval;
▪ transmit, towards the electronic network access device (9), a second signal (S2) carrying said identifier of the electrical energy delivery point and said data representative of the electrical energy consumption of the at least one electrical load in the defined time interval;
wherein the electronic network access device (9) is configured to:
▪ receive, from the Powerline electrical filter (5), the second signal carrying said identifier of the electrical energy delivery point and said data representative of the electrical energy consumption of the at least one electrical load in the defined time interval;
▪ transmit, through the telecommunications network (10), a third signal (S3) carrying said identifier of the electrical energy delivery point and said data representative of the electrical energy consumption of the at least one electrical load in the defined time interval;
wherein the telecommunications network (10) is configured to forward said identifier of the electrical energy delivery point and said data representative of the electrical energy consumption of the at least one electrical load in the defined time interval towards the electronic vendor device (11);
wherein the electronic vendor device (11) is configured to:
▪ receive, from the telecommunications network (10), a fourth signal (S4) carrying said identifier of the electrical energy delivery point and said data representative of the electrical energy consumption of the at least one electrical load in the defined time interval;
▪ transmit, through the telecommunications network (10), a fifth signal (S5) carrying the identifier of the electrical energy delivery point and carrying said data representative of the electrical energy consumption of the at least one electrical load in the defined time interval;
wherein the electronic user device (12) is configured to receive, from the telecommunications network, a sixth signal (S6) carrying said data representative of the electrical energy consumption of the at least one electrical load in the defined time interval.

2. Electronic system (1) according to claim 1, further comprising an electrical transformer station (7), wherein the electrical energy meter (6) is interposed between the electrical system and the electrical transformer station (7).

3. Electronic system (1) according to claim 1 or 2, wherein the Powerline electrical filter (5) is electrically connected to the electrical system (2) by means of a plug inserted into an electrical outlet of the electrical system or is electrically connected to the electrical system (2) by means of electrical terminals.

4. Electronic system (1) according to any one of the preceding claims, wherein the electronic vendor device (11) is configured to:
▪ calculate a value indicative of a cost, in the defined time interval, of the electrical energy consumption of the at least one electrical load of the electrical system associated with the energy delivery point;
▪ calculate a value indicative of a remaining credit associated with a user of the electrical energy delivery point, as a function of the value of an available credit of the user of the electrical energy delivery point and of said cost of the electrical energy consumption in the defined time interval;
▪ transmit, through the telecommunications network (10), the fifth signal (S5) carrying the identifier of the electrical energy delivery point and carrying the value indicative of the remaining credit associated with the electrical energy delivery point;
wherein the electronic user device (12) is configured to receive, from the telecommunications network, the sixth signal (S6) carrying said value indicative of the remaining credit of the user of the electrical energy delivery point.

5. Electronic system (1) according to any one of the preceding claims, comprising a plurality of electrical loads (3, 4) connected to the electrical system, wherein the electrical energy meter is configured to:
▪ measure, in said defined time interval, a plurality of values of electrical energy consumptions associated with the respective plurality of electrical loads;
▪ transmit (S1), through the electrical system (2), the first signal (S1) of the Powerline Communication type carrying the identifier representative of the electrical energy delivery point and carrying the data representative of said plurality of values of electrical energy consumptions of the plurality of electrical loads in the defined time interval;
wherein the Powerline electrical filter (5) is configured to:
▪ receive, from the electrical system (2), said first signal (S1) and extract therefrom the identifier of the delivery point and the data representative of the plurality of values of electrical energy consumptions of the plurality of electrical loads in the defined time interval;
▪ transmit, towards the electronic network access device (9), said identifier of the electrical energy delivery point and said data representative of the plurality of values of electrical energy consumptions of the plurality of electrical loads in the defined time interval;
wherein the electronic network access device (9) is configured to:
▪ receive, from the Powerline electrical filter (5), said identifier of the electrical energy delivery point and said data representative of the plurality of values of electrical energy consumptions of the plurality of electrical loads in the defined time interval;
▪ transmit, through the telecommunications network (10), the third signal (S3) carrying said identifier representative of the electrical energy delivery point and carrying said data representative of the plurality of values of electrical energy consumptions of the plurality of electrical loads in the defined time interval;
wherein the telecommunications network (10) is configured to forward, towards the electronic vendor device (11), said identifier of the electrical energy delivery point and said data representative of the plurality of values of electrical energy consumptions of the plurality of electrical loads in the defined time interval;
wherein the electronic vendor device (11) is configured to:
▪ receive, from the telecommunications network (10), the fourth signal (S4) carrying said identifier of the electrical energy delivery point and said data representative of the plurality of values of electrical energy consumptions of the plurality of electrical loads in the defined time interval;
▪ transmit, through the telecommunications network (10), the fifth signal (S5) carrying the identifier of the electrical energy delivery point and carrying said plurality of values of electrical energy consumptions of the plurality of electrical loads in the defined time interval;
wherein the electronic user device (12) is configured to receive, from the telecommunications network, the sixth signal (S6) carrying said plurality of values of the plurality of electrical loads in the defined time interval.

6. Electronic system (1) according to any one of the preceding claims, wherein the Powerline Communication signal is defined in the IEEE 1901 standard, version 2010 and subsequent amendments 2019 and 2020.

7. Electronic system (1) according to any one of the preceding claims, wherein:
- the electronic user device is a smartphone or tablet, or a desktop computer or a laptop;
- the electronic network access device (9) is a router modem provided with a Wi-Fi interface;
- the electronic vendor device is a network server and the telecommunications network is Internet.

8. Electronic system (1) according to any one of the preceding claims, wherein the electrical energy meter is configured to:
▪ measure, in a plurality of subsequent time intervals, a plurality of values of the electrical energy consumption of the at least one electrical load connected to the electrical system;
▪ transmit (S1), through the electrical system (2), the first signal (S1) of the Powerline Communication type carrying the identifier representative of the electrical energy delivery point associated with the electrical system (2) and carrying data representative of the plurality of values of the electrical energy consumption of the at least one electrical load connected to the electrical system in the plurality of time intervals;
wherein the Powerline electrical filter (5) is configured to:
▪ receive, from the electrical system (2), said first signal (S1) and extract therefrom the identifier of the electrical energy delivery point and the data representative of the plurality of values of the electrical energy consumption of the at least one electrical load in the plurality of time intervals;
▪ transmit, towards the electronic network access device (9), a second signal (S2) carrying said identifier of the electrical energy delivery point and said data representative of the plurality of values of the electrical energy consumption of the at least one electrical load in the plurality of time intervals;
wherein the electronic network access device (9) is configured to:
▪ receive, from the Powerline electrical filter (5), the second signal carrying said identifier of the electrical energy delivery point and said data representative of the plurality of values of the electrical energy consumption of the at least one electrical load in the plurality of time intervals;
▪ transmit, through the telecommunications network (10), a third signal (S3) carrying said identifier of the electrical energy delivery point and said data representative of the plurality of values of the electrical energy consumption of the at least one electrical load in the plurality of time intervals;
wherein the telecommunications network (10) is configured to forward said identifier of the electrical energy delivery point and said data representative of the electrical energy consumption of the at least one electrical load in the plurality of time intervals towards the electronic vendor device (11);
wherein the electronic vendor device (11) is configured to:
▪ receive, from the telecommunications network (10), a fourth signal (S4) carrying said identifier of the electrical energy delivery point and said data representative of the plurality of values of the electrical energy consumption of the at least one electrical load in the plurality of time intervals;
▪ transmit, through the telecommunications network (10), a fifth signal (S5) carrying the identifier of the electrical energy delivery point and carrying said data representative of the plurality of values of the electrical energy consumption of the at least one electrical load in the plurality of time intervals;
wherein the electronic user device (12) comprises a transceiver, a processing unit and a display,
wherein the transceiver of the electronic user device is configured to receive, from the telecommunications network, a sixth signal (S6) carrying said value indicative of the plurality of values of the electrical energy consumption of the at least one electrical load in the plurality of time intervals,
wherein the processing unit of the electronic user device is configured to calculate, as a function of the plurality of values of electrical energy consumption of the at least one electrical load in the plurality of time intervals, a plurality of values of the electrical energy consumption of the at least one electrical load on an hourly and/or daily and/or monthly basis,
and wherein the display is configured to display a graph representative of the electrical energy consumption of the at least one electrical load on an hourly and/or daily and/or monthly basis.

9. Electrical energy meter (6) for a domestic or industrial electrical system (2), the meter comprising an electrical signal transceiver of the Powerline Communication type and a plurality of electrical terminals connected to the electrical system,
wherein the meter is configured to measure, in a defined time interval, an electrical energy consumption of at least one electrical load connected to the electrical system,
wherein the transceiver is configured to transmit (S1) in the electrical system, through the electrical terminals, towards a Powerline electrical filter (5) connected to the electrical system (2), a signal (S1) of the Powerline Communication type carrying an identifier representative of an electrical energy delivery point associated with the electrical system and carrying data representative of the electrical energy consumption in the defined time interval of the at least one electrical load connected to the electrical system.

10. Powerline electrical filter (5) comprising:
- an electrical outlet or at least one electrical terminal adapted to connect to an electrical system (2) having at least one connected electrical load;
- a wired or wireless signal transceiver;
wherein the electrical outlet or the at least one electrical terminal are configured to receive, from the electrical system (2), a signal (S1) of the Powerline Communication type carrying an identifier representative of an electrical energy delivery point associated with the electrical system and carrying data representative of the electrical energy consumption in a defined time interval of the at least one connected electrical load;
wherein the transceiver is configured to transmit, towards an electronic network access device (9), a signal (S2) carrying said identifier representative of an electrical energy delivery point and carrying said data representative of the electrical energy consumption of the at least one electrical load in the defined time interval.

11. Electronic system to measure a gas or water consumption of a gas or water dispensing point, the system comprising:
- an electrical system (2);
- a gas and/or water consumption meter (106) comprising a processing unit, a short-medium distance wireless signal transceiver (S101) and a power supply battery to supply the processing unit and the transceiver;
- a Powerline electrical filter (5) electrically connected to the electrical system, the Powerline electrical filter comprising a first short-distance wired or wireless signal transceiver and comprising a second short-medium distance wireless signal transceiver;
- an electronic network access device (9) connected to the Powerline electrical filter;
- an electronic vendor device (11);
- an electronic user device (12);
- a telecommunications network (10) interposed between the electronic network access device (9) and the electronic vendor device (11) and between the electronic vendor device (11) and the electronic user device (12);
wherein the gas and/or water consumption meter (106) is configured to:
▪ measure by means of the processing unit, in a defined time interval, a gas and/or water consumption of the gas or water dispensing point;
▪ transmit, towards the Powerline electrical filter by means of the short-medium distance wireless signal transceiver, a first short-medium distance wireless signal (S101) carrying a respective identifier representative of the gas and/or water dispensing point and carrying data representative of the gas and/or water consumption of the gas and/or water dispensing point in the defined time interval;
wherein the Powerline electrical filter (5) is configured to:
▪ receive from the gas and/or water consumption meter, by means of the second short-medium distance wireless signal transceiver, said first short-medium distance wireless signal (S101) and extract therefrom the respective identifier of the gas and/or water dispensing point and the data representative of the gas and/or water consumption in the defined time interval;
▪ transmit, towards the electronic network access device (9) by means of the first wired or wireless signal transceiver, a second signal (S2) carrying said respective identifier of the gas and/or water dispensing point and carrying said data representative of the gas and/or water consumption in the defined time interval;
wherein the electronic network access device (9) is configured to:
▪ receive, from the Powerline electrical filter (5), the second signal carrying said respective identifier of the gas and/or water dispensing point and carrying said data representative of the gas and/or water consumption in the defined time interval;
▪ transmit, through the telecommunications network (10), a third signal carrying said respective identifier of the gas and/or water dispensing point and carrying said data representative of the gas and/or water consumption in the defined time interval;
wherein the telecommunications network (10) is configured to forward, towards the electronic vendor device (11), said respective identifier of the gas and/or water dispensing point and said data representative of the gas and/or water consumption in the defined time interval;
wherein the electronic vendor device (11) is configured to:
▪ receive, from the telecommunications network (10), a fourth signal (S4) carrying said respective identifier of the gas and/or water dispensing point and said data representative of the gas and/or water consumption in the defined time interval;
▪ transmit, through the telecommunications network (10), a fifth signal (S5) carrying said respective identifier of the gas and/or water dispensing point and carrying said data representative of the gas and/or water consumption in the defined time interval;
wherein the electronic user device (12) is configured to receive, from the telecommunications network, a sixth signal (S6) carrying said data representative of the gas and/or water consumption in the defined time interval.

12. Electronic system according to claim 11, wherein the electronic vendor device (11) is configured to:
▪ calculate a value indicative of a cost, in the defined time interval, of the gas or water consumption associated with the gas or water dispensing point;
▪ calculate a value indicative of a remaining credit associated with a user of the gas and/or water dispensing point, as a function of the value of an available credit of the user of the gas and/or water dispensing point and of said cost of gas and/or water consumption in the defined time interval;
▪ transmit, through the telecommunications network (10), the fifth signal (S5) carrying the respective identifier of the gas and/or water dispensing point and carrying the value indicative of the remaining credit associated with the gas and/or water dispensing point;
wherein the electronic user device (12) is configured to receive, from the telecommunications network, the sixth signal (S6) carrying said value indicative of the remaining credit of the user of the gas and/or water dispensing point.

13. Gas and/or water consumption meter (106), the meter comprising a processing unit, a short-medium distance wireless signal transceiver (S101) and a power supply battery to supply the processing unit and the transceiver, wherein the processing unit is configured to measure, in a defined time interval, a gas and/or water consumption,
wherein the short-medium distance wireless signal transceiver is configured to transmit, towards a Powerline electrical filter (5) connected to an electrical system (2), a short-medium distance wireless signal (S101) carrying a respective identifier representative of a gas and/or water dispensing point and carrying data representative of the gas and/or water consumption of said gas and/or water dispensing point in the defined time interval.

14. Meter according to claim 8, wherein the short-medium distance wireless signal transceiver is of the Wireless M-bus, wM-Bus, 169 Mhz or Long Range Wide Area Network, LoRaWan, 868 Mhz type.

15. Powerline electrical filter (5) comprising:
- an electrical outlet or at least one electrical terminal adapted to connect to an electrical system (2);
- a first short-distance wired or wireless signal transceiver;
- a second short-medium distance wireless signal transceiver;
wherein the second short-medium distance wireless signal transceiver is configured to receive, from a gas and/or water consumptions meter, a short-medium distance wireless signal (S101) carrying a respective identifier representative of a gas and/or water dispensing point and carrying data representative of the gas and/or water consumptions of said gas or water dispensing point;
wherein the first transceiver is configured to transmit, towards an electronic network access device (9), a signal (S2) carrying said respective identifier representative of the gas and/or water dispensing point and carrying said data representative of the gas and/or water consumption of said gas and/or water dispensing point.
